Europäisches Patentamt

European Patent Office

Office européen des brevets

(11) Veröffentlichungsnummer: **0 318 828 B1**

(12) **EUROPÄISCHE PATENTSCHRIFT**

(45) Veröffentlichungstag der Patentschrift: **30.09.92**

(51) Int. Cl.⁵: **G11B 23/087**

(21) Anmeldenummer: **88119550.7**

(22) Anmeldetag: **24.11.88**

(54) **Verriegelungseinrichtung für eine Kassette und eine Kassette damit.**

(30) Priorität: **03.12.87 DE 8715990 U**

(43) Veröffentlichungstag der Anmeldung:
**07.06.89 Patentblatt 89/23**

(45) Bekanntmachung des Hinweises auf die
Patenterteilung:
**30.09.92 Patentblatt 92/40**

(84) Benannte Vertragsstaaten:
**AT DE FR GB IT NL SE**

(56) Entgegenhaltungen:
EP-A- 0 097 964     EP-A- 0 103 314
EP-A- 0 191 387     DE-A- 3 328 299
DE-U- 8 713 865     DE-U- 8 715 990
DE-U- 8 800 894     GB-A- 2 134 485

(73) Patentinhaber: **BASF Aktiengesellschaft**
**Carl-Bosch-Strasse 38**
**W-6700 Ludwigshafen(DE)**

(72) Erfinder: **Schoettle, Klaus**
**Bergstrasse 115**
**W-6900 Heidelberg(DE)**
Erfinder: **Gliniorz, Lothar**
**Carl-Bosch-Ring 24**
**W-6710 Frankenthal(DE)**
Erfinder: **Dreyer, Juergen**
**Brandeckstrasse 11**
**W-7608 Willstaett(DE)**
Erfinder: **Schmidts, Kurt**
**Oberer Graben 1**
**W-7635 Schwanau(DE)**

## Beschreibung

Die Erfindung betrifft eine Kassette mit einer Verriegelungseinrichtung, bestehend aus einem, um eine Lagerachse einer Lagereinrichtung verschwenkbaren Schwenkelement und einer daran unterhalb der Lagerachse angeordneten Riegeleinrichtung, wobei die Lagereinrichtung mit Gehäusewänden der Kassette zusammenwirkt und wobei das Schwenkelement wenigstens teilweise aus elastisch verformbarem Material besteht und wobei die Riegeleinrichtung zum Verschwenken betätigbar angeordnet ist.

Es ist eine Verriegelungseinrichtung bekannt, bei dem eine schwenkbar gelagerte Verriegelungsplatte mittels einer daran befestigten, separaten Schwenkfeder gegen das Gehäuse der Kassette abgestützt ist, um eine Vorspannung in Verriegelungsposition zu erzeugen. Ein direkt verriegelnder Vorsprung an der Verriegelungsplatte steht in Verriegelungsposition mit einer Ausnehmung in einer Schwenkklappe der Kassette in Eingriff, und ein anderer Vorsprung an der Verriegelungsplatte wird zum Auslösen der Verriegelungsplatte von außerhalb des Gehäuses betätigt, und damit wird die Verriegelungsplatte gegen die Vorspannung verschwenkt und gibt die Schwenkklappe zum Aufschwenken und Öffnen der Kassette frei. (Vergleiche zu diesem Stand der Technik Figur 1.) Es ist eine weitere Kassette mit Verriegelungsklappe zum selben Zweck aus der US-A-4-466 583 bzw. aus dem DE-U-85 04 032 bekannt, wobei die Schwenkfeder des obigen Standes der Technik durch eine integrierte, angespritzte Kunststoffschwenkfeder ersetzt ist. Auch diese Ausführung einer integrierten Kunststoff-Feder ist nachteilig wegen der komplizierten und aufwendigen Fertigung, bei der aufwendige Werkzeuge notwendig sind, und durch die hervorstehenden Kunststoff-Federn, die die Weiterverarbeitung und Konfektionierung (Zusammenbau) der Kassetten durch Verhaken behindern.

Mit der EP-A-191 387 ist eine Kassette mit Verriegelungsmechanismus bekannt, wobei eine an der Schwenkplatte angeformte Feder sich oberhalb der Lagerachse an der Innenseite der Kassettenwand abstützt. Diese Feder ist jedoch in der Ruhelage der Schwenkplatte nicht spannungsfrei.

Die Erfindung hat sich daher die Aufgabe gestellt, die Nachteile der bekannten Kassetten mit Verriegelungseinrichtungen auszuschalten, deren Herstellung wirtschaftlicher zu machen und deren Lebensdauer zu verlängern.

Die Aufgabe wird mit einer Kassette mit Verriegelungseinrichtung, bestehend aus einem, um eine Lagerachse einer Lagereinrichtung verschwenkbares Schwenkelement und einer daraus unterhalb der Lagerachse angeordneten Riegeleinrichtung, wobei die Lagereinrichtung mit Gehäusewänden der Kassette zusammenwirkt und wobei das Schwenkelement wenigstens teilweise aus elastisch verformbaren Material besteht und wobei die Riegeleinrichtung betätigbar angeordnet ist, dadurch gelöst,
daß das Schwenkelement oberhalb der Lagerachse einen Stützfortsatz aufweist und
daß das Schwenkelement mit dem Stützfortsatz und/oder einem Teil unterhalb der Lagerachse in Ruhelage mit der Innenseite der Außenwandung im wesentlichen spannungsfrei in Kontakt steht,
wobei in Betriebslage bei Betätigung der Riegeleinrichtung das Schwenkelement verschwenkt und dabei in einen Spannungseinstand überführt wird, wobei der Stützfortsatz in Kontakt mit der Innenseite der Gehäuseaußenwandung steht und der untere Teil des Schwenkelements nicht in Kontakt mit der Gehäusewandung steht.

Damit wird erreicht, daß das Schwenkelement gerade ohne oder praktisch mit minimalem Spiel oder Andruck an der Gehäusewandung anliegt. Das Schwenkelement befindet sich in seiner Winkel-Ruhelage, in der die Riegeleinrichtung nicht betätigt ist, praktisch unbelastet und völlig spannungsfrei in der Kassette, die z.B. eine VHS-Videocassette sein kann. Von etwa 5 bis 10 Jahren mittlerer Lagerzeit oder Benutzungsdauer ist eine solche Kassette kaum mehr als 100 bis 200 Stunden im Betrieb, das heißt nur in diesem relativ kurzen Zeitraum ist das Schwenkelement an seinem Stützfortsatz, der als Widerlager wirksam ist, belastet. Demgegenüber stehen die angespritzten dünnen Kunststoffedern des Standes der Technik während der gesamten Lebensdauer der Kassetten unter Last und werden dehalb auch bei sehr elastischen, dünnen thermoplastischem Kunststoffmaterial einmal erlahmen, d.h., daß sich die Federeigenschaften ändern, da das thermoplastische Fließen dieser Kunststoffmaterialien last- und zeitdauerabhängig ist.

Überraschend hat sich bei der Kassette mit Verriegelungseinrichtung der vorliegenden Erfindung gezeigt, daß durch die Anordnung des Stützfortsatzes direkt oberhalb der Lagerachse die innere Elastizität des Schwenkelements zwischen den Lagerpunkten der Lagereinrichtung zur Aufbringung einer Federkraft im Schwenkbereich des Schwenkelements, also bei und nach dessen Betätigung ausreicht, um in dessen Ruhelage die Verriegelungsfunktion aufrechtzuerhalten und in Betätigungslage die notwendige Vorspannung bzw. Federkraft aufzubringen.

Praktisch ist jede Kontaktstelle zwischen dem Schwenkelement und der Gehäusewandung im Abstand von der Lagerachse vorgesehen. Zweckmäßig kann der wenigstens eine Stützfortsatz im wesentlichen in der Mitte zwischen den Lagerkörpern der Lagereinrichtung angeordnet sein. Dadurch ist ein nachträglicher Einbau in bereits vorhandene VHS-Cassetten möglich und außerdem ist ein im wesentlichen symmetrischer Kraftangriff gewährleistet.

In praktischer Ausführung sind die Abstände der Kontaktstellen des Stützfortsatzes und des unteren Teils der Schwenkplatte von der Lagerachse etwa im Verhältnis von 1:12 bis 1:6 auszulegen, wodurch bei üblichen Maßen der Schwenkplatte und bekannten thermoplastischen Materialien Kräfte in den gewünschten Größen erreichbar sind. Praktisch kann der Stützfortsatz am freien Ende gegenüber der Gehäuseaußenwandung mit einer Materialverdickung ausgebildet sein, wodurch eine Winkellage der Schwenkplatte erhalten wird.

In Ruhelage der Schwenkplatte kann der Winkel zwischen derselben und der Gehäuseaußenwandung im Bereich von ca. 0,5° bis ca. 1,5° liegen. In zweckmäßiger Ausführung ist das Schwenkelement als Schwenkplatte ausgebildet. In weiterer praktischer Ausführung kann die Schwenkplatte mit einer rahmenartigen Verstärkung ausgebildet sein, die bis zu den Lagerkörpern der Lagereinrichtung reicht, und die Schwenkplatte kann zwischen den Lagerkörpern unter Einbezug des Stützfortsatzes mit gegenüber der Rahmenverstärkung verminderter Dicke und dadurch flexibel ausgebildet sein.

Die Erfindung wird anhand von in Zeichnungen dargestellten Aufführungsbeispielen nachfolgend beschrieben.

Es zeigen:

Figur 1     Stand der Technik, teilweise herausgebrochen dargestellt,

Figur 2     dasselbe Vorder-Eckteil mit einer Verriegelungseinrichtung mit einer Schwenkplatte mit integrierter Feder

Figur 3     eine zweite Ausführung in Schwenkplatte mit integrierter Feder

Figur 3A     eine Draufsicht auf die Schwenkplatte gemäß Fig. 3

Figur 4     die Verriegelungseinrichtung der Figur 1 in Seitenansicht in Ruhelage und Betätigungslage der Schwenkplatte

Figur 5     eine Ausschnittsvergrößerung aus Figur 4, teilweise im Schnitt

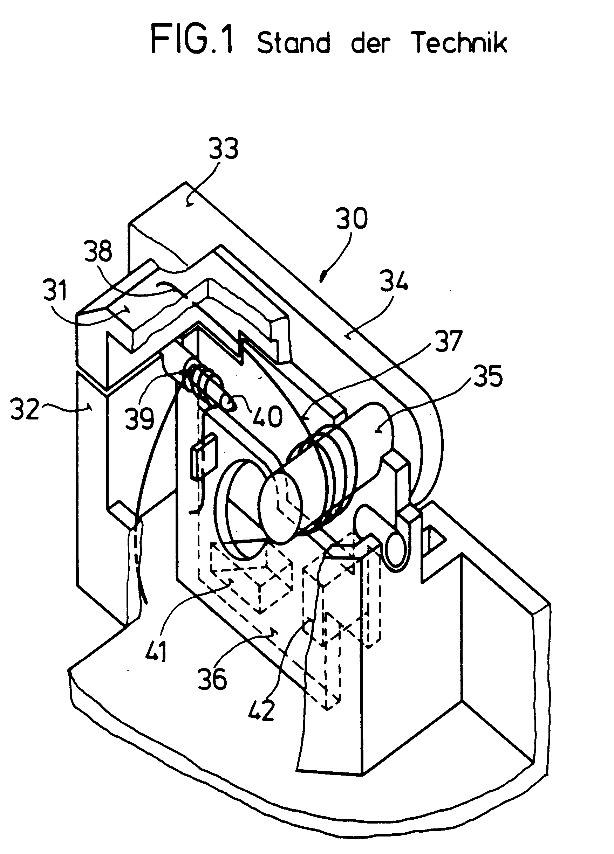

Figur 1 zeigt einen vorderen Eckteil 30 einer VHS-Cassette, bestehend aus oberen und unteren Gehäuseteilen 31, 32, die geeignet miteinander verbunden sind. Zum Schutz des nicht dargestellten Bandes vor Beschädigung dient eine Schwenkklappe 33 mit Seitenwänden 34, an deren Innenseiten Stifte 35 angespritzt sind, um die die Schwenkklappe verschwenkbar ist. Im unteren Gehäuseteil 31 ist eine schwenkbare Verriegelungsplatte 36 vorgesehen, welche mittels eines Vorsprungs 41, der in eine nicht dargestellte Ausnehmung in der Klappen-Seitenwand 34 eingreift, das Verriegeln durch die Verriegelungsplatte 36 bewerkstelligt. Die Schwenkplatte 33 mit Seitenwänden 34 ist gegenüber den Gehäuseteilen 31, 32 in Schließstellung vorgespannt mittels einer auf einem Zapfen 35 vorgesehenen Schwenkfeder 37, deren Schenkel 38 an der Unterseite der Schwenkklappe 33 angreift. Die Verriegelungsplatte 36 ist über eine weitere Schwenkfeder 39, die auf einem Lagerzapfen 40 der Verriegelungsplatte 36 angeordnet ist und deren Schenkel sich gegen eine Rippe des Gehäusebodenteils 31 abstützt, in ihrer Verriegelungsstellung vorgespannt. An der Verriegelungsplatte 36 ist auch ein größerer Betätigungsvorsprung 42 vorgesehen, der von außerhalb der Kassette betätigbar ist.

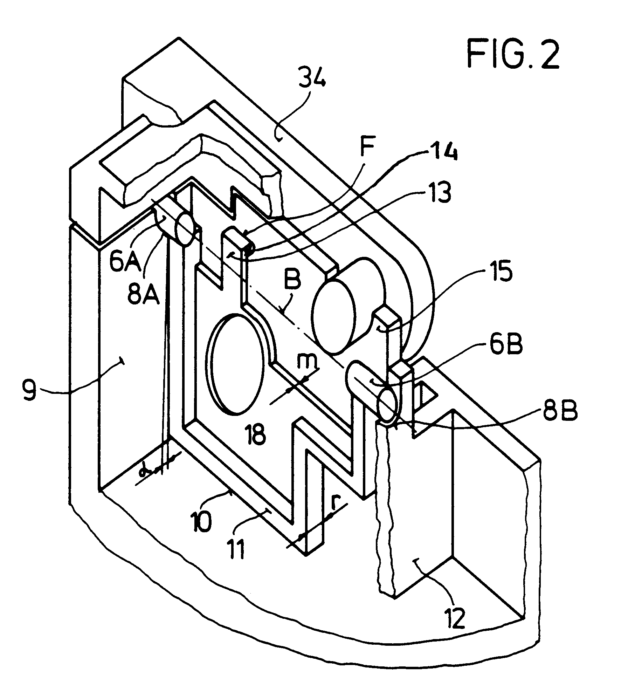

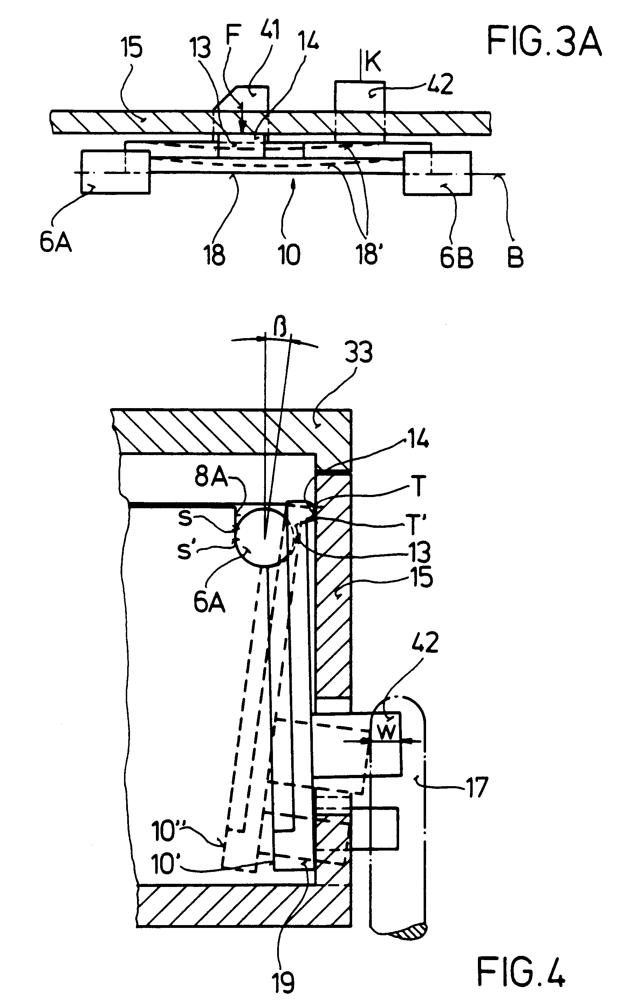

In Figur 2 ist eine Verriegelungseinrichtung gemäß der vorliegenden Erfindung dargestellt. Die Schenkelfeder 37 ist aus Gründen der Übersichtlichkeit weggelassen worden. Die Schwenkplatte 10 ist mit einem Rahmen 11 ausgebildet und besitzt am Fuß mit der Riegeleinrichtung 7, gebildet aus Vorsprüngen 41 und 42, die in Figur 4 sichtbar sind, Mittel zur Verriegelung bzw. zur Betätigung der Verriegelungseinrichtung von außerhalb der Kassette. Am oberen Ende der Schenkplatte 10 sind rechts und links zylindrische Lagerelemente 6A und 6B als Lagereinrichtungen 6 vorgesehen. Es kann auch eine gemeinsame Zylinderachse als Lagereinrichtung verwendet werden. Die Zylinder-Lagerelemente 6A und 6B sind Teile der Lagereinrichtung 6, wozu noch Lageröffnungen 8A und 8B in der Kassettenaußenwand 9 bzw. in der Innenwand 12 gerechnet werden. Die Lagerachse, die gleichzeitig die Schwenkachse der Schwenkplatte 10 ist, ist mit B bezeichnet. Etwa in der Mitte zwischen den Lagerelementen 6A und 6B ist wenigstens ein Stützfortsatz 13 vorgesehen, der hier die Form einer Nase besitzt mit einer Nocke 14 am freien Ende als Materialverdickung zur Abstandshaltung gegenüber der Seitenaußenwandung 15. Die Kontaktstelle der Nocke 14 an der Innenseite der Seitenaußenwandung 15 ist mit "F" bezeichnet.

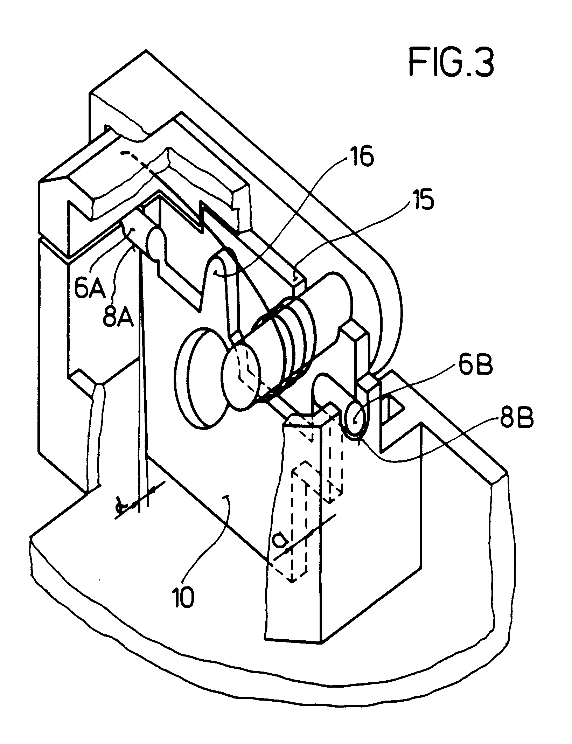

In Figur 3 ist die Schwenkplatte 10 mit einheitlicher Dicke e (ohne Rahmen 11) dargestellt. Der Stützfortsatz 16 besitzt hier Keilform mit der größten Materialanhäufung am freien Ende. Figur 3A zeigt eine Draufsicht auf die Schwenkplatte 10 in ihrer Ausführung und Anordnung aus Figur 2. Die eingezeichneten Biegelinien 18' zeigen den elastischen Teil 18 während des Kraftangriffs mittels der Kraft K am Betätigungsvorsprung 42 und die Wirkung der Anlage des Nockens 14 am Stützfortsatz 13 an der Innenseite der Außenwandung 15 an der Kontaktstelle F.

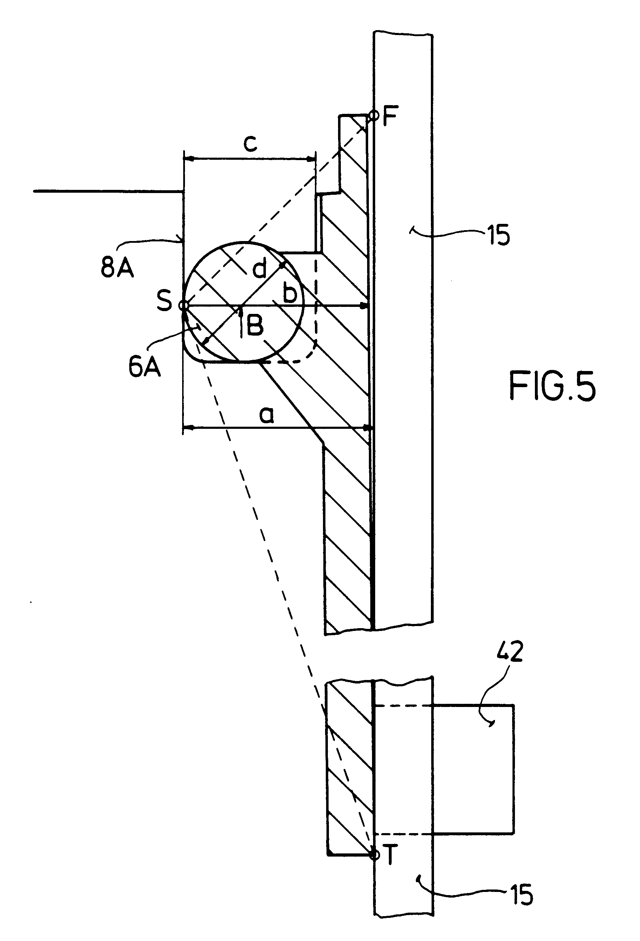

Wie am deutlichsten aus Figur 5 hervorgeht ist es notwendig, die Berührungsstelle S des Lagerzylinderelements 6A, 6B in einem Abstand b von der der Außenwandung 9 zugewandten Seite der Schwenkplatte 10 vorzusehen, der sich zum Abstand a der Außenwandung selbst so verhält, daß a gleich oder geringfügig größer als b ist. In der Praxis soll a-b ~ 0 - 0,2 mm betragen. Damit ist die Winkellage der Schwenkplatte 10 in Ruhelage und das Maß der Auslenkung in Betriebslage definiert.

Es ist ferner notwendig, das seitliche Spiel c des Zylinderkörpers 6A, 6B in den Lageröffnungen 8A und 8B so zu dimensionieren, daß c - d ≥ 0,2 mm beträgt, wobei d der Zylinderdurchmesser ist. Damit kann sichergestellt werden, daß bei üblichen Toleranzen und normaler Flexibilität der Schwenkplatte 10 kein Verklemmen der Lagereinrichtung 6 auftritt.

In Figur 5 ist dargestellt, daß Kontaktstellen an S und T vorhanden sind. Daneben ist es jedoch auch möglich, daß außer der Kontaktstelle F auch eine Kontaktstelle T an der Unterkante 19 der Schwenkplatte 10 vorhanden ist, z.B. wie in Figur 4 gezeigt, wo nur ein Nocken 14 und die Unterkante 19 als Kontaktteile selbst benutzt werden. Im Falle der Verwendung von Abstandsnocken ist der Abstand b bis zum kontaktierenden Vorderende der Nocke zu rechnen und obige Dimensionierungsvorschrift sollte gewahrt sein.

Es ist praktisch günstig, wenn die erste Kontaktstelle F bzw. T zwischen dem Stützfortsatz 16 bzw. 13 des Schwenkelements 10 und der Gehäusewandung 15 der Kassette und die zweite Kontaktstelle T zwischen dem unteren Teil 19 des Schwenkelements 10 und der Gehäusewandung 15 Abstände von der Lagerachse B im Größenverhältnis von 1 : 6 bis 1 : 12 besitzen.

Figur 4 zeigt die Schwenkplatte 10 mit dem Abstandsnocken 14 am Stützfortsatz 13 in Ruhelage 10′ und Betriebslage 10″ während in der Ruhelage 10′ (Figur 2 u. 3) der Auslenkungswinkel $\alpha$ aus der Vertikalen etwa 0,5 - 1,5° beträgt, was auch durch die Nockenmaße bestimmt wird, beträgt in Betriebslage der Auslenkunkswinkel $\beta$ ca. 10°. Generell dürfte $\beta$ im Bereich von 5 - 20° liegen, was natürlich von der Ausbildung und dem Betätigungsweg W der Riegeleinrichtung, insbesondere des Betätigungsvorsprungs 42 durch den Betätigungszapfen 17 abhängig ist.

In der um den Winkel $\beta$ von z.B. 10° ausgelenkten Stellung 10″ der Schwenkplatte 10 hat sich die Lage des Zapfens 6A geringfügig geändert (Versatz der Kontaktstellen S'nach S″) und folglich hat sich auch die Kontaktstelle des Nockens 14 von T nach T′ verschoben. In dieser Lage 10″ der Schwenkplatte 10 kommt ihre volle Elastizität und Flexibilität zur Wirkung, die in der Ausführung der Figur 2 durch den Bereich verminderter Dicke "m", 18 zwischen Rahmen 11 und Lagern 6A, 6B und durch den Stützfortsatz 13 bestimmt sind. Die Dikke des Rahmenteils 11 ist mit "r" bezeichnet. Beim VHS-System ist die Auslenkkraft als kleiner 15 pond $\hat{=}$ 15 cN festgelegt. Die in Figuren 3 und 3a dargestellte Ausführung benötigt zur Betätigung eine relativ kleine Auslenkkraft K ~ 8-12 cN bei einem der folgenden Materialien: Polyoxymethylen (POM), Polystyrol (PS), Polypropylen (PP) oder ABS und bei POM bei einer Schwenkplattendicke von e = 1-2 mm. Die genannten Werkstoffe müssen dafür wegen der erforderlichen flexiblen Eigenschaften einen Elastizitätsmodul zwischen 2500 N/mm$^2$ und 3500 N/mm$^2$, vorzugsweise von etwa 3000 N/mm$^2$ aufweisen. Die Kräfte, die über die Schwenkplatte 10 aufgebracht wurden, sind vorwiegend Biegekräfte. Selbstverständlich können auch Reaktionskräfte von solchen Schwenkplatten oder ähnlichen Verriegelungs- oder Bremselementen im Bereich von ca. 1 cN bis 30 cN oder auch darüber dimensioniert werden, insbesondere, wenn andere Abmessungs- und Raumverhältnisse gegeben sind.

Die Erfindung ist für Videokassetten beschrieben. Jedoch ist die Verriegelungseinrichtung für jede Art von Kassetten mit automatischer Entriegelungseinrichtung im Gerät ebenso vorteilhaft einsetzbar. Kassetten dieser Art sind auch Audio-, Daten-, Film- und Plattenkassetten.

**Patentansprüche**

1. Kassette mit einer Verriegelungseinrichtung, bestehend aus einem, um eine Lagerachse (B) einer Lagereinrichtung (b) verschwenkbares Schwenkelement (10) und einer daran unterhalb der Lagerachse angeordneten Riegeleinrichtung (41, 42), wobei die Lagereinrichtung mit Gehäusewänden der Kassette zusammenwirkt und wobei das Schwenkelement wenigstens teilweise aus elastisch verformbarem Material besteht und wobei die Riegeleinrichtung zum Verschwenken betätigbar angeordnet ist, dadurch gekennzeichnet, daß das Schwenkelement (10) oberhalb der Lagerachse (B) einen Stützfortsatz (13) aufweist und daß das Schwenkelement (10) mit dem Stützfortsatz (13) und/oder einem Teil (19) unterhalb der Lagerachse (B) in Ruhelage mit der Innenseite der Außenwandung (15) im wesentlichen spannungsfrei in Kontakt steht, wobei in Betriebslage bei Betätigung der Riegeleinrichtung (42) das Schwenkelement (10) verschwenkt und dabei in einen Spannungszustand und eine Lage überführt wird, in der der Stützfortsatz (13) in Kontakt mit der Innenseite der Gehäusewandung (15) steht und der untere Teil (19) des Schwenkelements (10) nicht mehr in Kontakt mit der Gehäusewandung (15) steht.

2. Kassette nach Anspruch 1, dadurch gekennzeichnet, daß jede Kontaktstelle (F, T) zwischen dem Schwenkelement (10) und der Gehäusewandung (15) im Abstand von der Lagerachse (B) vorgesehen ist.

3. Kassette nach Anspruch 1 oder 2, dadurch gekennzeichnet, daß der wenigstens eine Stützfortsatz (13, 16) im wesentlichen in der Mitte zwischen den Lagerkörpern (6A, 6B) der Lagereinrichtung (6) angeordnet ist.

4. Kassette nach Anspruch 2, dadurch gekennzeichnet, daß die Abstände der Kontaktstellen (F, T) des Stützfortsatzes (13, 16) und des unteren Teils (19) des Schwenkelements (10) von der Lagerachse (B) etwa im Verhältnis von 1:6 bis 1:12 stehen.

5. Kassette nach einem der Ansprüche 1 bis 4, dadurch gekennzeichnet, daß der Stützfortsatz (13, 16) am freien Ende gegenüber der Gehäuseaußenwandung (15) mit einer Materialverdikkung (14) ausgebildet ist.

6. Kassette nach einem der Ansprüche 1 bis 5, dadurch gekennzeichnet, daß in Ruhelage des Schwenkelements (10) der Winkel zwischen Schwenkplatte und Außenwandung (15) im Bereich von ca. 0,5° ≦ 1,5° liegt.

7. Kassette nach einem der Ansprüche 1 bis 6, dadurch gekennzeichnet, daß das Schwenkelement (10) als Schwenkplatte ausgebildet ist.

8. Kassette nach Anspruch 7, dadurch gekennzeichnet, daß die Schwenkplatte (10) mit einer rahmenartigen Verstärkung (11) ausgebildet ist, die bis zu den Lagerkörpern (6A, 6B) der Lagereinrichtung reicht, und daß der Bereich (19) der Schwenkplatte (10) zwischen den Lagerkörpern (6A und 6B) unter Einbezug des Stützfortsatzes (13, 16) mit gegenüber der Rahmenverstärkung (11) verminderter Dicke (m) und dadurch flexibel ausgebildet ist.

**Claims**

1. A cassette, having a locking means consisting of a swivel element (10) which is rotatable about a bearing axis (B) of a bearing means (b) and of a locking apparatus (41, 42) arranged thereon below the bearing axis, the bearing means interacting with walls of the cassette housing and the swivel element consisting partially or completely of elastically deformable material and the locking apparatus being arranged so that it can be caused to rotate, wherein the swivel element (10) has a supporting extension (13) above the bearing axis (B), and, in the rest position, the swivel element (10) with the supporting extension (13) and/or a part (19) below the bearing axis (B) is in contact, essentially without tension, with the inside of the outer wall (15), and, in the operating position, when the locking apparatus (42) is actuated, the swivel element (10) rotates and is thus converted into a state of tension, the supporting extension (13) being in contact with the inside of the housing wall (15) and the lower part (19) of the swivel element (10) not being in contact with the housing wall (15).

2. A cassette as claimed in claim 1, wherein each contact point (F, T) between the swivel element (10) and the housing wall (15) is provided at a distance from the bearing axis (B).

3. A cassette as claimed in claim 1 or 2, wherein the one or more supporting extensions (13, 16) are arranged essentially in the middle between the bearing elements (6A, 6B) of the bearing means (6).

4. A cassette as claimed in claim 2, wherein the distances of the contact points (F, T) of the supporting extension (13, 16) and of the lower part (19) of the swivel element (10) from the bearing axis (B) have a ratio of about 1 : 6 to 1 : 12.

5. A cassette as claimed in any of claims 1 to 4, wherein the supporting extension (13, 16) is designed with a material thickening (14) at the free end toward the outer housing wall (15).

6. A cassette as claimed in any of claims 1 to 5, wherein, in the rest position of the swivel element (10), the angle between the swivel plate and the outer wall (15) is from about 0.5° ≦ 1.5°.

7. A cassette as claimed in any of claims 1 to 6, wherein the swivel element (10) is in the form of a swivel plate.

8. A cassette as claimed in claim 7, wherein the swivel plate (10) is provided with a frame-like reinforcement (11) which extends as far as the bearing elements (6A, 6B) of the bearing means, and the region (19) of the swivel plate (10) between the bearing elements (6A and 6B), including the supporting extension (13, 16), has a reduced thickness (m) compared with the frame reinforcement (11) and is thus flexible.

**Revendications**

1. Cassette comportant un dispositif de verrouillage constitué d'un élément basculant (10) pouvant basculer autour d'un axe d'appui (B) d'un dispositif d'appui (6), et d'un dispositif verrou (41, 42) placé sur cet élément basculant (10) au-dessous de l'axe d'appui, le dispositif d'appui coopérant avec des parois du boîtier de la cassette, l'élément basculant étant au moins en partie en matière déformable élastiquement et le dispositif verrou étant placé de façon à pouvoir être actionné pour le basculement, caractérisée par le fait que l'élément basculant (10) présente, au-dessus de l'axe d'appui (B), un appendice de butée (13) et que l'élément basculant (10), en position de repos, est en contact pratiquement sans contrainte, par l'appendice de butée (13) et/ou une partie (19) située au-dessous de l'axe d'appui (B), avec la face intérieure de la paroi extérieure (15), tandis qu'en position de fonctionnement en cas d'actionnement du dispositif verrou (42), l'élément basculant (10) est basculé et alors mis dans un état de contrainte et une position dans laquelle l'appendice de butée (13) est en contact avec la face intérieure de la paroi (15) du boîtier et la partie inférieure (19) de l'élément basculant (10) n'est plus en contact avec la paroi (15) du boîtier.

2. Cassette selon la revendication 1, caractérisée par le fait que chaque endroit de contact (F, T) entre l'élément basculant (10) et la paroi (15) du boîtier est prévu à une certaine distance de l'axe d'appui (B).

3. Cassette selon l'une des revendications 1 et 2, caractérisée par le fait que l'appendice de butée (13, 16), au moins un, est placé sensiblement au milieu entre les corps d'appui (6A, 6B) du dispositif d'appui (6).

4. Cassette selon la revendication 2, caractérisée par le fait que les distances entre les endroits de contact (F, T) de l'appendice de butée (13, 16) et de la partie inférieure (19) de l'élément basculant (10) et l'axe d'appui (B) sont dans un rapport d'environ 1/6 à 1/12.

5. Cassette selon l'une des revendications 1 à 4, caractérisée par le fait que l'appendice de butée (13, 16) est pourvu d'un épaississement de matière (14) à son extrémité libre en face de la paroi extérieure (15) du boîtier.

6. Cassette selon l'une des revendications 1 à 5, caractérisée par le fait que, lorsque l'élément basculant (10) est en position de repos, l'angle entre la plaque basculante et la paroi extérieure (15) est compris entre environ 0,5 et 1,5 degrés.

7. Cassette selon l'une des revendications 1 à 6, caractérisée par le fait que l'élément basculant (10) est une plaque basculante.

8. Cassette selon la revendication 7, caractérisée par le fait que la plaque basculante (10) est pourvue d'un renfort du genre cadre (11) qui va jusqu'aux corps d'appui (6A, 6B) du dispositif d'appui, et que la partie (18) de la plaque basculante (10) située entre les corps d'appui (6A et 6B), à l'inclusion de l'appendice de butée (13, 16), a une épaisseur (m) réduite par rapport au renfort du genre cadre (11) et est ainsi flexible.

# FIG.1 Stand der Technik

FIG.2

FIG.3

FIG.3A

FIG.4

FIG.5